# EUROPEAN PATENT APPLICATION

(11) **EP 3 501 344 A1**
(43) Date of publication of application: **26.06.2019**
(21) Application number: 18210082.6
(22) Date of filing: 04.12.2018
(51) Int. Cl.: A47J 31/30

(54) **DEVICE FOR PREPARING BEVERAGES BY INFUSION**

(30) Priority: 05.12.2017 IT 201700140336
(71) Applicant: Trentino Erbe di Tondin Florenza, 38015 Lavis (TN) (IT)
(72) Inventor: DEGASPERI, Rolando, 38015 Lavis (TN) (IT)
(74) Representative: Leone, Mario

(57) **Abstract**

A device (1) for the production of beverages by infusion, includes a boiler (2) and a container (5), arranged above the boiler (2) with a rising through channel (4), the boiler (2) and the container (5) being joined at an opened mouth thereof (10), and a safety valve 11 arranged on a side wall, wherein obstructing means is provided interposing between boiler (2) and rising through channel (4) by implementing a mobile wall (20) closing said boiler (2) and which is capable of assuming two distinct configurations: a first configuration wherein the boiler (2) is closed by the mobile wall (20) at the mouth thereof (10), thus preventing the water of the boiler (2) from rising through in the container (5) and allowing the inner pressure to rise until a predetermined value; and a second configuration wherein the pressure inside the boiler (2) produces on the mobile wall a force so as to overcome an elastic force which keeps the wall in the first configuration, such force determining a displacement of the mobile wall (20) in said second configuration thus achieving a reduced passage section (25).

## Description

The present invention relates to a device for preparing beverages by infusion, of the type arranged to be heated on a stove and comprising a boiler closed by a filter-like perforated cover, in turn connected with a rising through channel having reduced section which supplies the beverage in a container arranged above the boiler; the invention further relates to the relative operating procedure of the above-mentioned device.

For implementing the families of hot beverages there is a plurality of devices, which differentiate depending upon the beverage which has to be implemented.

Different infusion products, which can be in form of leaves or powder (ground product), both having variable sizes, request specific conditions for an optimum process, in case by involving different types of filtering and separation between fluid product and infusion.

The above-highlighted device is of the type commonly used to produce coffee for hot infusion: in the boiler a container for infusion powder is arranged which is connected on the lower side to a duct which draws in the liquid contained in boiler, that is water.

When the water temperature rises by approaching to the boiling temperature, the pressure inside the boiler increases as the temperature rises, and it pushes the hot water through the draught duct, the container including the powder and the rising through duct. The powder, ground coffee, is kept between two filter-like walls. This configuration is known under the name "Moka".

The pressure increase allowing the water to travel the above-mentioned route is determined by the pressure drops which are caused by the reduced passage section of the ducts, by the filter-like walls and by the ground coffee which is impregnated and then crossed by the water wherein coffee aroma infuses.

However, this device can be used for the production of beverages of other types, resulting from the infusion of fragments of leaves and not powder, which offer a different resistance and which then cannot simply replace powder coffee.

Some examples of using a device of "Moka" type to obtain infusions different from coffee are described by the International patent application N. WO 2006/018858 A1 and by the International patent application N. WO 2006/018860 A1: in both described devices the container for coffee is replaced by an element which reduces the passage section for rising through from the boiler to the upper container, but which is likely to be obstructed by fragments of leaves.

The technical problem underlying the present invention is to implement a device for producing a beverage by infusion allowing to obviate the drawbacks mentioned with reference of known art.

Such problem is solved by a device for the implementation of infusions according to claim 1.

The present invention provides some relevant advantages. In particular, it is prevented that the fragments of leaves, soaked together water in the boiler, obstruct the rising through duct drawing in the boiler, by inserting a rising through element which determines the setting-up of an optimum difference pressure between the heated boiler and outside.

Other advantages, features and use modes of the present invention will be made evident from the following detailed description of some embodiments thereof, given by way of not limiting example. The figures of the enclosed drawings will be referred to, wherein:
- figure 1 is a perspective view di a device for the production of beverages by infusion according to the present invention;
- figure 2 is an exploded perspective view of the device of figure 1;
- figure 3 is a side section view illustrating the operation of a device of figures 1 and 2 according to the present invention, according to a first embodiment example of the invention;
- figure 4 is a side section view illustrating the operation of a device of figures 1 and 2 according to the present invention, in a second embodiment example of the invention;
- figure 5 shows a perspective view of obstructing means of an embodiment example of the present invention;
- figures 6 to 8 show respective perspective of obstructing means of an additional embodiment example of the present invention; and
- figure 9 shows a side section of an additional device for the production of beverages by infusion according to a third embodiment example of the invention.

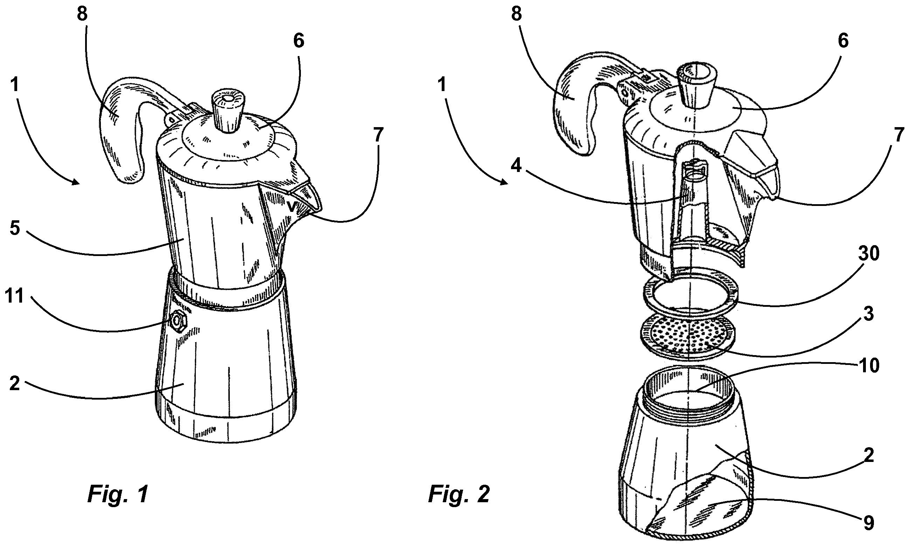

With reference to figure 1 and 2, a device for the production of beverages by infusion is described, designated as a whole with 1. It comprises a boiler 2 closed by a possible filter-like perforated septum 3, in turn connected to a rising through channel 4 having reduced section which supplies the beverage in a container 5 arranged above the boiler, provided with lid 6, dispensing spout 7 arranged on the upper edge and handle 8.

The boiler 2 and the container 5 with all other above-mentioned portions are separated therebetween, and they are suitable to be joined thanks to a screw coupling or other type of joint. The perforated septum 3 in particular constitutes the bottom of the container 5, being fitted in the opening which the container 5 has on the lower side below the inlet section of the rising through channel 4. Between septum 3 and container 5 there can be an annular gasket 30, which spaces apart the septum 3 from the lower wall 31 of the container 5.

The boiler 2 is one-piece container having a bottom 9 apt to be rested onto a heat or energy source, for example a stove, a thermal plate or an induction hob.

On the upper portion it has an open mouth 10 and a safety valve 11 arranged on a side wall.

The boiler generally is formed as one single piece by moulding or injection in a mould, made of aluminium or stainless steel or another suitable material.

It is suitable to be filled up with water thereto, according to the present invention, a preparation for infusion is added, for example fragments of leaves or flowers, intended to be infused in water when it is heated in the boiler.

The above-described structure substantially follows closely that of a coffee maker of "Moka" type, comprising, at the mouth 10 of the boiler 2 a suspended filter, full of coffee powder or the like, which receives water through a lower perforated wall thereof and by a duct drawing liquid in the boiler itself.

The coffee does not obstruct completely the passage between the boiler and the rising through channel, but it increases very much the pressure load required to the liquid in the boiler to rise through the suspended filter, the possible perforated lid 3, and the rising through channel 4. Therefore, when the water temperature rises by approaching to the boiling temperature, in the empty space inside the boiler 2 there is an increase in pressure which, when it reaches a sufficient value, allows the water to rise through, by passing through the coffee powder and thus implementing a coffee infusion.

However, according to the present invention, no suspended filter is provided, even since the infusion is implemented directly in the boiler, but obstructing means interposes, between boiler and the rising through channel, a mobile wall in opposition to an elastic force.

The mobile wall is capable of assuming two distinct configurations:
a first configuration wherein the top of the boiler 2 is closed by the wall at the mouth thereof 10, thus preventing the water of the boiler 2 from rising through in the container 5 and allowing the inner pressure to rise until a predetermined value; and
a second configuration wherein the pressure inside the boiler 2 produces on the mobile wall a force so as to overcome an elastic force which keeps the wall in the first configuration - such force determines the displacement of the wall in said second configuration thus achieving a reduced passage section which, according to a preferred embodiment example, is formed in proximity of the side walls of the boiler, with an annular and toroidal shape.

In the second configuration, the pressure inside the boiler 2 pushes the infusion which is implemented inside thereof upwards, as far as the top of the rising through channel 4.

According to a first version, such mobile wall has a disc-like shape and it has a stopping point in the centre thereof. The mobile wall is made of an elastically deformable material, as harmonic steel having predetermined thickness, which deforms in response to the rising of the pressure in the boiler. This deformation causes the displacement upwards of the peripheral edge thereof, previously rested on a supporting structure and re-closed thereon, upwards, thus forming said reduced passage section.

In another version, the mobile wall is still formed by a disc with a peripheral edge rested closing on a supporting structure, but it is kept in position by a spring of said supporting structure, acting directly on the wall with a force which pushes it downwards. The rising of the pressure inside the boiler causes the compression of the spring, in particular a helical spring arranged wound on a stem, and the translation of the mobile wall upwards, thus by moving the peripheral edge and forming said reduced passage section.

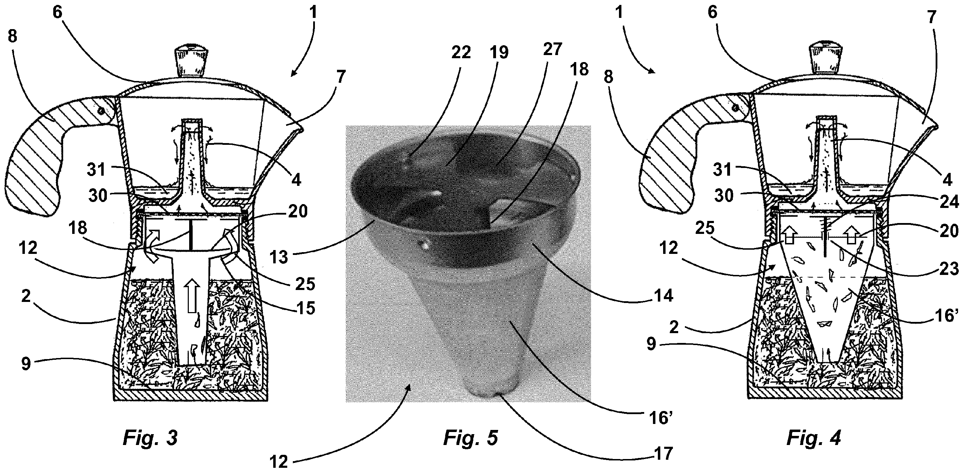

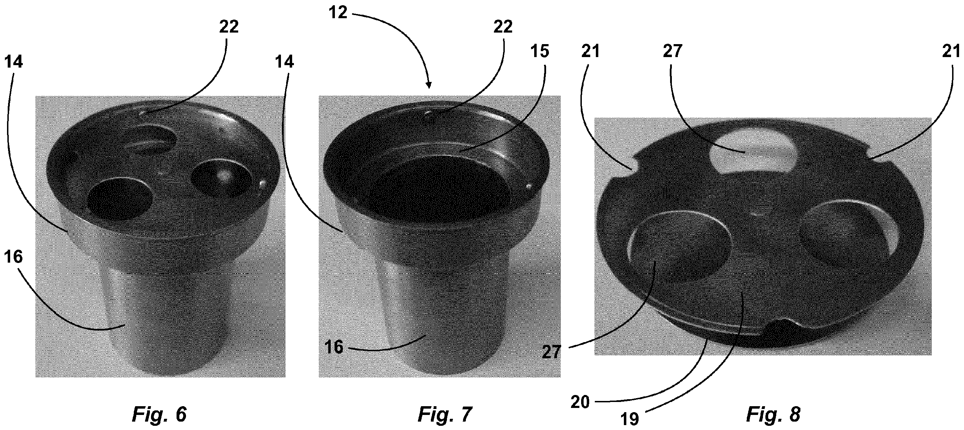

With reference to figures 3 and 6 to 8 a first example of supporting structure 12 and relative mobile wall, designated with 20, are described.

The supporting structure 12 has a funnel-like shape and it is suitable to be inserted in the mouth 10 of the boiler 2, by remaining rested onto the upper edge thereof thanks to a projecting rim 13. It has an upper portion 14 with a flared bottom 15 from the centre thereof a drawing duct 16 branches downwards, which duct is positioned with a lower inlet section 17 near the bottom 9 of the boiler 2.

The upper portion 14 in turn comprises a supporting stem 18 which is connected, at its own respective ends, to a positioning septum 19 and to said mobile wall 20.

In this example, the connection between stem 18 and mobile wall 20 is fixed, for example a welding or a screw connection with a not represented bolt, whereas the mobile wall 20 is of the type made of elastically deformable material.

In said first configuration, it rests upon the flared bottom 15 of the upper portion 14, but its peripheral edge rises (figure 3) once a sufficient pressure has established inside the boiler 2, thus implementing a reduced passage section 25 at said peripheral edge of the mobile wall 20.

It is to be noted that the positioning septum 19 has extended openings 27 and an edge thereon recesses 22 are formed which conjugate with respective pins 22 projecting in the internal portion from the wall of the upper portion 14 of the supporting structure 12.

Therefore, the positioning septum 19 can be inserted in the upper portion 14, by resting the mobile wall 20 onto the flared bottom 15, by making said pins 22 to pass in said recesses 21, and then by rotating the positioning septum 19 in order to fit it in said first configuration below the pins 22.

With reference to figures 4 and 5, a second example of supporting structure 12 and related mobile wall, designated with 20, are described. The same numeral references will be used to designate equal or equivalent portions with respect to the preceding example.

The supporting structure 12 has a shape like a conical funnel and it is suitable to be inserted in the mouth 10 of the boiler 2, by remaining rested upon the upper edge thereof thanks to a projecting rim 13. It has an upper portion 14 jointed to a conical duct 16' extending downwards, by ending with a lower inlet section, arranged at the bottom 9 of the boiler 2.

The upper portion 14 in turn includes a supporting stem 18 which is connected, at its own respective ends, to a positioning septum 19 and to said mobile wall 20.

It has a central hole 23 therethrough the stem 18 can slide, but between the mobile wall 20 and the positioning septum a helical spring 24 is arranged in compression, so that the mobile wall 20 is pushed downwards, in said first configuration wherein the edges thereof are closed resting upon the conical wall of the conical duct 16', however being intended to rise (figure 4) once a sufficient pressure has established inside the boiler 2, thus implementing a reduced passage section 25 at said peripheral edge of the mobile wall 20.

It is to be noted that, analogously to the previous example, the positioning septum 19 has a star-like configuration producing extended openings 27 extending as far as including the edge, thus forming recesses which allow the passage of pins 22 projecting on the inner side from the wall of the upper portion 14 of the supporting structure 12.

Therefore, the positioning septum 19 can be inserted in the upper portion 14, by resting the mobile wall 20 onto the conical duct 16', by making said pins 22 to pass in said openings 27, and then by rotating the positioning septum 19 in order to fit it in said first configuration below the pins 22.

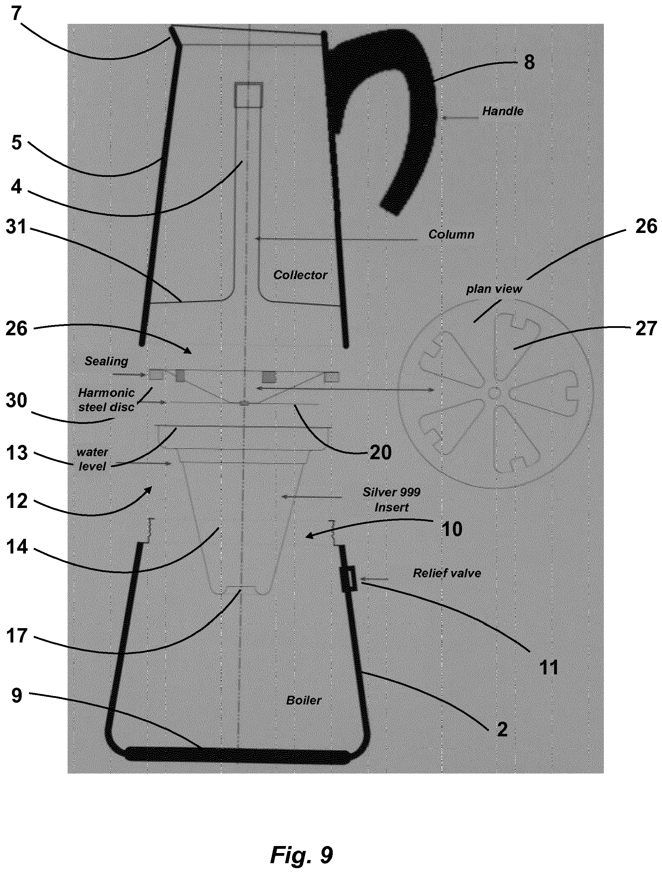

With reference to figure 9 only, a third example of supporting structure 12 and related mobile wall, designated with 20, are described. The same reference numerals will be used to designate equal or equivalent portions with respect to the preceding example.

The supporting structure 12 has a double conical shape, with the cone vertexes directed downwards.

In particular, the supporting structure 12 comprises a first solid conical wall 14, the base thereof is open and the upper edge thereof has a rim 13 which can be rested upon the upper edge surrounding the mouth 9 of the boiler 2. The first conical wall 14 extends downwards, by ending with a lower inlet section 17, arranged at the bottom 9 of the boiler 2.

It includes inside thereof a second conical wall 26 having extended openings 27, to the vertex thereof a mobile wall 20 is fastened, for example by means of welding and thanks to a not represented bolt or a rivet.

Said second conical wall 26, having on its own edge an annular gasket 30, is suitable to be fitted between said first conical wall 14 and the container 5 which is fixed onto the mouth 9 of the boiler 2. Therefore, the second conical wall 26 in reality in case replaces the perforated septum 3 described previously.

The upper portion 14 in turn includes a supporting stem 18 which is connected, at its own respective ends, to a positioning septum 19 and to said mobile wall 20.

As in the first example, the position of the mobile wall 20 is so as to rest closing on the first conical wall, thus by closing the mouth of the boiler. However, the mobile wall 20 is of the type made of elastically deformable material.

In said first configuration, it rests upon the first conical wall 14, but the peripheral edge thereof rises once a sufficient pressure has established inside the boiler 2, thus implementing a reduced passage section at said peripheral edge of the mobile wall 20.

According to an additional variant, instead of the mobile wall 20 the second conical wall 26 could be of the type made of elastically deformable material, so as to behave like a sheet-like spring, thus by guaranteeing the mobility of the mobile wall 20.

The mobile wall 20 and the related supporting structure at last can have a total or partial cover made of silver, due to its anti-bacterial properties.

From what described above, it is to be meant that the present invention further relates to an obstructing device of a boiler 2 comprising the above-mentioned supporting structure 12 which is suitable to be rested onto the upper edge of the boiler 2 and extending inside thereof as far as a lower inlet section 17, arranged at the bottom 9 of the boiler 2.

In the supporting structure 12 a mobile wall 20 is received, closed resting on the inner walls of the supporting structure 12, so as to obstruct the mouth 10 of the boiler 2, so that it can assume the two above-described configurations.

Moreover, the invention relates to the use of the above-described obstructing device, that is a method for preparing a beverage by infusion, comprising the step of arranging a device, in particular of the "Moka" type for coffee and which can even be used for the production of beverages by infusion, including a boiler 2 and a container 5, arranged above the boiler 2 with a rising through channel 4, wherein the boiler 2 and the container 5 are joined at an open mouth 10 thereof.

The boiler 2 is filled-up with an amount of water and infusion material as far as a pre-established level, after that the device, that is the boiler, is arranged on a heat or energy source, with the forethought of inserting in advance in the boiler an obstructing device as described above.

The heat or energy source determines the increase in the water temperature by approaching it to the boiling one and it causes, after a certain period of time, the infusion rising through in said container 5, as it occurs for a coffee.

Therefore, with the above-described obstructing device, it is possible to use a normal coffee pot to obtain an infusion of herbs instead of coffee, having the forethought to replace the suspended filter which usually includes the powder coffee.

The present invention has been sofar described with reference to preferred embodiments. It is to be meant that other embodiments belonging to the same inventive core may exist, all within the protective scope of the enclosed claims.

## Claims

1. A device (1) for the production of beverages by infusion, including a boiler (2) and a container (5), arranged above the boiler (2) with a rising through channel (4), the boiler (2) and the container (5) being joined at an opened mouth thereof (10), **characterized in that** it further comprises obstructing means interposing between boiler (2) and rising through channel (4) by implementing a mobile wall (20) closing said boiler (2) and which is capable of assuming two distinct configurations:
• a first configuration wherein the boiler (2) is closed by the mobile wall (20) at the mouth thereof (10), thus preventing the water of the boiler (2) from rising through in the container (5) and allowing the inner pressure to rise until a predetermined value; and
• a second configuration wherein the pressure inside the boiler (2) produces a force onto the mobile wall, so as to overcome an elastic force which keeps the wall in the first configuration, such force determining a displacement of the mobile wall (20) in said second configuration thus achieving a reduced passage section (25) .

2. The device (1) according to claim 1, wherein the reduced passage section (25) is obtained in proximity of the side walls of the boiler (2).

3. The device (1) according to claim 1 or 2, wherein the reduced passage section (25) has an annular shape.

4. The device (1) according to claim 1, wherein said mobile wall (20) can be elastically deformed, being made in particular of a harmonic metal, and it is kept at the centre thereof.

5. The device (1) according to claim 1, wherein a spring (24) acts on said mobile wall (20).

6. The device (1) according to anyone of the preceding claims, wherein said mobile wall (20) is received in a supporting structure (12) rested onto the upper edge of the boiler (2).

7. The device (1) according to claim 6, wherein said supporting structure (12) extends as far as a lower inlet section (17), arranged at the bottom 9 of the boiler (2).

8. A device for obstructing a boiler (2) of a device for the infusion of beverages, comprising:
• a supporting structure (12) rested onto the upper edge of the boiler (2) and extending as far as a lower inlet section (17), arranged at the bottom (9) of the boiler (2); and
• a mobile wall (20), closed resting on the inner walls of the supporting structure (12) by obstructing the mouth of said boiler (2), which is capable of assuming two distinct configurations:
o a first configuration wherein the boiler (2) is closed by the mobile wall (20), thus preventing the water of the boiler (2) from rising through and allowing the inner pressure to rise until a predetermined value; and
o a second configuration wherein the pressure inside the boiler (2) produces on the mobile wall a force so as to overcome an elastic force which keeps the wall in the first configuration, such force determining a displacement of the mobile wall (20) in said second configuration thus achieving a reduced passage section (25).

9. The device (1) according to claim 8, wherein the reduced passage section (25) has an annular shape.

10. The device (1) according to claim 8, wherein said mobile wall (20) can be elastically deformed, in particular a harmonic metal, and it is kept at the centre thereof.

11. The device (1) according to claim 8, wherein a spring (24) acts on said mobile wall (20).

12. The device (1) according to anyone of claims 8 to 11, wherein said mobile wall (20) is received in a supporting structure (12) rested onto the upper edge of the boiler (2).

13. The device (1) according to claim 12, wherein said mobile wall (20) is kept in said first configuration on the lower end of a stem (18) connected to a positioning septum (19) inserted in said supporting structure (12).

14. The device (1) according to claim 12, wherein said mobile wall (20) is kept in said first configuration by a conic wall (26) the base thereof is positioned at the mouth (10) of the boiler (2), the mobile wall (20) being connected to the vertex of the conic wall (26).

15. A method for preparing a beverage by infusion, comprising the steps of:
• arranging a device (1) for the production of beverages by infusion, including a boiler (2) and a container (5), arranged above the boiler (2) with a rising through channel (4), the boiler (2) and the container (5) being joined at an opened mouth thereof (10);
• filling-up the boiler (2) with an amount of water and infusion material as far as a pre-established level;
• inserting in said boiler (2) an obstructing device according to anyone of claims 11 to 17; and
• increasing the water temperature up to the infusion rising through in said container (5).
